# EUROPÄISCHE PATENTSCHRIFT

(11) **EP 1 010 592 B1**
(45) Veröffentlichungstag und Bekanntmachung des Hinweises auf die Patenterteilung: **08.06.2005**
(21) Anmeldenummer: 99124873.3
(22) Anmeldetag: 16.12.1999
(51) Int. Cl.: B60R 21/26

(54) **Vorrichtung zum Aufblasen eines Fahrzeuginsassen-Rückhaltesystems**
Inflating device for a vehicle occupant restraint system
Dispositif de gonflage pour système de retenue de passagers de véhicule

(30) Priorität: 18.12.1998 DE 29822617 U
(43) Veröffentlichungstag der Anmeldung: 21.06.2000
(73) Patentinhaber: TRW Automotive GmbH, 73553 Alfdorf (DE)
(72) Erfinder: Mangold, Rolf, 73527 Tierhaupten (DE); Fischer, Anton, 73579 Leinweiler (DE)
(74) Vertreter: Kitzhofer, Thomas, Dipl.-Ing.

(56) Entgegenhaltungen:
- EP-A- 0 792 776
- DE-A- 19 532 023
- DE-A- 19 542 436
- DE-U- 29 614 201
- US-A- 5 174 600
- US-A- 5 630 619

## Beschreibung

Die Erfindung betrifft eine Vorrichtung zum Aufblasen eines Fahrzeuginsassen-Rückhaltesystems, insbesondere eines Gassacks, nach dem Oberbegriff des Anspruchs 1.

Zum Aufblasen eines Gassacks oder zum Betätigen eines anderen Fahrzeuginsassen-Rückhaltesystems sind verschiedene Systeme bekannt, nämlich beispielsweise ein pyrotechnischer Gasgenerator, der im Rückhaltefall schlagartig Gas erzeugt. Darüber hinaus gibt es sogenannte Hybrid-Gasgeneratoren, die ein pyrotechnisches Treibmaterial ebenso wie Druckgas im selben Gehäuse enthalten. Die Menge des frei werdenden Gases muß auf das Rückhaltesystem genau abgestimmt sein. Das bedeutet, daß für jedes Rückhaltesystem ein eigener Gasgenerator entwickelt wird, was sehr aufwendig ist. Die Möglichkeit, über die Füllmenge des Treibmaterials die erzeugte Gasmenge zu variieren, läßt nur beschränkte Variationsmöglichkeiten zu.

Aus der gattungsgemäßen EP 0 792 776 A1 ist ein Zweistufen-Gasgenerator bekannt, bei dem eine Stufe mit einer in dem Druckgasbehälter untergebrachten Brennkammer versehen ist. Über das in der Brennkammer erzeugte Druckgas wird ein Projektil beschleunigt, welches die Membrane an der Ausströmöffnung des Druckgasbehälters zerstört.

Die DE 296 14 201 U beschreibt einen Windowbag mit einer längs des Dachrahmens verlaufenden Gaslanze, wobei an den entgegengesetzten Enden der Gaslanze jeweils ein Gasgenerator sitzt.

Schließlich beschreibt die DE 195 32 023 A1 einen Hybrid-Gasgenerator, bei dem das Brennkammergehäuse unmittelbar an der Druckkammer befestigt ist und diese von außen öffnet.

Die Erfindung schafft eine Vorrichtung, die ein leichtes Variieren der frei werdenden Gasmenge ermöglicht, so daß sie ohne hohen Kostenaufwand an das Rückhaltesystem optimal angepaßt werden kann. Dies wird durch eine Vorrichtung nach Anspruch 1 gelöst. Im Rückhaltefall werden Gasgenerator und Druckgasbehälter aktiviert, und das Gas sowohl aus dem Gasgenerator als auch das Druckgas aus dem Druckgasbehälter wird in das Rückhaltesystem eingeleitet. Die erfindungsgemäße Vorrichtung sieht zwei getrennte Behälter für den pyrotechnisches Treibmaterial enthaltenden Gasgenerator und den Druckgasbehälter vor und unterscheidet sich damit von bislang bekannten Hybrid-Gasgeneratoren. Das Trennen der Vorrichtung in zwei unterschiedliche, von einander beabstandete Behälter bietet den Vorteil, daß die Vorrichtung durch verschiedene und verschieden gefüllte Druckgasbehälter sehr leicht und kostengünstig an das Rückhaltesytem angepaßt werden kann. Druckgasbehälter sind nämlich im Gegensatz zu pyrotechnisches Treibmaterial enthaltende Gasgeneratoren in ihrer Herstellung und in ihrem Befüllen sehr billig. Darüber hinaus kann der Füllgrad des Druckgasbehälters auf einfache Weise sehr stark variiert werden. Ein Hersteller von erfindungsgemäßen Vorrichtungen kann damit für verschiedene Rückhaltesysteme den gleichen Gasgenerator verwenden und lediglich durch Hinzufügung unterschiedlicher Druckgasbehälter die gesamte Vorrichtung individuell dem Rückhaltesystem anpassen.

Gasgenerator und Druckgasbehälter sind strömungsmäßig über eine als langgestrechtes körper ausgebildete Gasleitung miteinander verbunden. Dies gewährleistet auch, daß sich das heiße vom Gasgenerator erzeugte Gas und das kalte Druckgas vermischen können. Das Mischgas hat dann eine niedrigere Temperatur und belastet das Rückhaltesystem thermisch weniger. Das beim Aktivieren des Gasgenerators entstehende Gas strömt zum Druckgasbehälter und öffnet diesen. Es ist dadurch ausreichend, nur den Gasgenerator zu aktivieren; das Öffnen des Druckgasbehälters erfolgt zwangsläufig.

Die Gasleitung, über die Gasgenerator und Druckgasbehälter verbunden sind, kann auch mit Ausströmöffnungen versehen sein, über die das Gas des Gasgenerators und des Druckgasbehälters in das Rückhaltesystem strömt, um gemeinsam den Gassack, der das Rückhaltesystem in diesem Fall bildet, aufzublasen. Es ist in diesem Fall nur eine Gasleitung erforderlich, die Gasgenerator und Druckgasbehälter gemeinsam ist. Die Gasleitung hat eine Doppelfunktion, indem sie auch als gasverteilender Diffusorkörper wirkt.

Der langgestreckte Körper kann bogenförmig gekrümmt sein, insbesondere wenn die Vorrichtung zum Entfalten eines sogenannten Kopf-Seitengassacks, auch Windowbag genannt, dient. Dann kann der langgestreckte Körper nämlich dem Verlauf des Dachrahmens, an dem er befestigt ist, angepaßt sein.

Die Erfindung betrifft darüber hinaus ein Insassen-Rückhaltesystem für ein Fahrzeug, wobei das Rückhaltesystem einen Kopf-Seitengassack aufweist, der im Rückhaltefall wenigstens Bereiche der Seitenscheiben des Fahrzeugs abdeckt. Das Rückhaltesystem umfaßt ferner die erfindungsgemäße Vorrichtung, wobei der Gassack in der Dachrahmenverkleidung untergebracht ist. Wenn ein Kopf-Seitengassack vorgesehen ist, der sich von seitlich des Front- bis seitlich des Heckinsassen erstreckt, ist die bereits zuvor erwähnte Gasleitung vorgesehen, über die Gas in das Innere des Gassacks eingeblasen wird.

Zur leichteren Unterbringung der Vorrichtung ist an einem axialen Ende der Gasleitung der Gasgenerator und am anderen der Druckgasbehälter vorgesehen. Somit strömt über beide Enden Gas in das Innere des Gassacks ein und nicht nur von einem Ende. Sowohl der Abschnitt für den Fahrzeugfrontinsassen als auch der Abschnitt für den Fahrzeugheckinsassen des Gassacks wird damit schnell und annähernd gleichzeitig aufgeblasen. Wenn Gas nur von einem axialen Ende in die Gasleitung einströmt, wird im Gegensatz dazu am entgegengesetzten Ende mit Verzögerung Gas zur Verfügung stehen.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Seitenansicht eines erfindungsgemäßen Insassen-Rückhaltesystems im aufgeblasenen Zustand samt der erfindungsgemäßen Vorrichtung zu Ihrem Aufblasen, wobei die Vorrichtung in eingebautem Zustand zu sehen ist; und
- Figur 2 die in Figur 1 gezeigte Vorrichtung ohne Dachrahmenverkleidung.

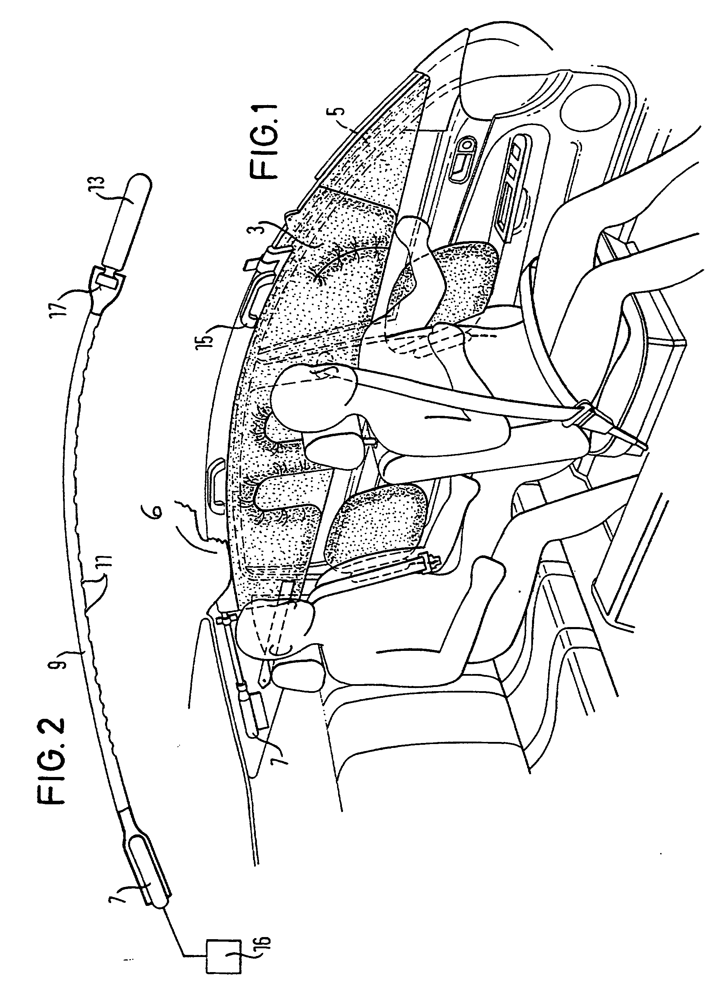

In Figur 1 ist ein Insassen-Rückhaltesystem für ein Fahrzeug dargestellt. Dieses weist einen Kopf-Seitengassack 3 auf, der in aufgeblasenem Zustand die Seitenscheiben sowohl des Front- als auch des Heckinsassen abdeckt. Im gefalteten Zustand erstreckt sich der Kopf-Seitengassack 3 parallel zum Dachrahmen 5 und ist an diesem auch befestigt. Er ist jedoch durch eine Dachrahmenverkleidung 6, die abschnittsweise dargestellt ist, von außen nicht sichtbar.

Das Insassen-Rückhaltesystem umfaßt darüber hinaus eine Vorrichtung zum Aufblasen des Gassacks 3, die in Figur 2 detailliert dargestellt ist. Die Vorrichtung besteht aus einem sogenannten Rohrgasgenerator 7, der ein pyrotechnisches Treibmaterial enthält. Der Rohrgasgenerator 7 ist am Ausläufer des Dachrahmens 5 im Bereich der fahrzeugheckseitigen D-Säule untergebracht (vgl. Figur 1). Eine als langgestreckter Körper ausgebildete Gasleitung 9, an deren einen axialen Ende der Gasgenerator 7 angeschlossen ist, erstreckt sich parallel zum Dachrahmen und in den Kopf-Seitengassack 3. In dem Bereich, in dem die Gasleitung im Kopf-Seitengassack 3 verläuft, sind zahlreiche Ausströmöffnungen 11 vorhanden. Am anderen axialen Ende sitzt ein Druckgasbehälter 13. Der Gasgenerator 7 und der Druckgasbehälter 13 stehen mit dem Inneren der Gasleitung 9 in Verbindung und sind damit strömungsmäßig miteinander verbunden. Der Druckgasbehälter 13 ist im Bereich des vorderen Haltegriffs 15 unter der Dachrahmenverkleidung versteckt angeordnet.

Im Rückhaltefall wird der Gasgenerator 7 durch eine Steuereinheit 16 aktiviert. Das erzeugte heiße Gas gelangt in die Gasleitung 9, strömt zum Teil über die Ausströmöffnungen 11 in den Gassack und entfaltet diesen. Eine erste Druckwelle jedoch gelangt unmittelbar zum Druckgasbehälter 13, wo sie auf dessen stirnseitiges Ende 17 trifft. Der Druckgasbehälter 13 ist am Ende 17 so ausgelegt, daß er zwar dem Druck des in ihm enthaltenen Gases standhält, nicht jedoch der vom Gasgenerator 7 erzeugten Druckwelle. Durch die Druckwelle wird er an seinem Ende 17 geöffnet, so daß das Druckgas in die Gasleitung 9 strömt. In der Gasleitung 9 vermischt sich das kalte Druckgas mit dem heißen, aus dem Gasgenerator 7 stammenden Gas. Der Gassack 3 wird gleichmäßig aufgeblasen und entfaltet sich von oben nach unten.

Wenn ein Gassack 3 mit einem anderen Querschnitt oder einem anderen Füllvolumen eingebaut werden soll, kann die Anpassung der Vorrichtung einfach dadurch geschehen, daß ein anderer Druckgasbehälter 13 mit einem anderen Volumen oder einem anderen Füllgrad in den Rest der Vorrichtung eingesetzt wird.

Die Gasleitung 9 kann aus flexiblem Material sein, welches sich dem Verlauf des Dachrahmens 5 beim Befestigen anpaßt, so daß auch bezüglich der Gasleitung 9 nur geringe Änderungen bei der Anpassung an ein anderes Rückhaltesystem erforderlich sind.

Gasgenerator 7 und Druckgasbehälter 13 können im Vergleich zur Anordnung nach Figur 2 auch an den jeweils anderen Enden der Gasleitung 9 angebracht sein, wobei diese Ausführungsform dann im wesentlichen nur spiegelbildlich zu der in Fig. 2 gezeigten aussieht.

## Patentansprüche

1. Vorrichtung zum Aufblasen eines Fahrzeuginsassen-Rückhaltesystems, insbesondere eines Gassacks (3), mit
einem, pyrotechnisches Treibmaterial enthaltenden Gasgenerator (7) und
einem Druckgasbehälter (13), wobei im Rückhaltefall der Gasgenerator (7) und der Druckgasbehälter (13) aktiviert werden und ihr Gas in das Rückhaltesystem einleiten,
**dadurch gekennzeichnet, daß**
der Gasgenerator (7) außerhalb, getrennt und beabstandet vom Druckgasbehälter (13) angeordnet und mit dem Druckgasbehälter (13) über eine als langgestreckter Körper ausgebildete Gasleitung (9) strömungsmäßig verbunden ist,
wobei der Gasgenerator (7) und der Druckgasbehälter (13) jeweils an entgegengesetzten Enden der Gasleitung (9) angeordnet sind und beim Aktivieren des Gasgenerators (7) entstehendes Gas über die Gasleitung (9) zum Druckgasbehälter (13) strömt und diesen öffnet.

2. Vorrichtung nach Anspruch 1, **dadurch gekennzeichnet, daß** die Gasleitung (9) Ausströmöffnungen (11) aufweist, über die das Gas des Gasgenerators (7) und des Druckgasbehälters (13) in das Rückhaltesystem strömt.

3. Vorrichtung nach Anspruch 1 oder 2, **dadurch gekennzeichnet, daß** das Rückhaltesystem einen Gassack (3) aufweist und daß die Gasleitung (9) mit dem Inneren des Gassacks (3) in Strömungsverbindung steht und daß Gasgenerator (7) und Druckgasbehälter (13) gemeinsam den Gassack (3) aufblasen.

4. Vorrichtung nach einem der vorhergehenden Ansprüche, **dadurch gekennzeichnet, daß** die Gasleitung (9) aus flexiblem Material ist.

5. Vorrichtung nach einem der vorhergehenden Ansprüche, **dadurch gekennzeichnet, daß** die Gasleitung (9) ein langgestreckter, bogenförmig gekrümmter Körper (9) ist, dessen Verlauf dem Verlauf des Dachrahmens des Fahrzeugs, in das er eingebaut ist, angepaßt ist.

6. Insassen-Rückhaltesystem für ein Fahrzeug, das einen Dachrahmen (5) aufweist, wobei das Rückhaltesystem einen Kopf-Seitengassack (3), der im Rückhaltefall wenigstens Bereiche der Seitenscheiben des Fahrzeugs abdeckt, und die Vorrichtung nach einem der vorhergehenden Ansprüche umfaßt, wobei der Kopf-Seitengassack (3) im nicht aktivierten Zustand unter der Dachrahmenverkleidung angeordnet ist.

7. Insassen-Rückhaltesystem nach Anspruch 6, **dadurch gekennzeichnet, daß** sich der Kopf-Seitengassack (3) von wenigstens seitlich des Frontinsassen bis wenigstens seitlich des Heckinsassen erstreckt und daß die Vorrichtung eine Gasleitung (9) aufweist, über die Gas in das Innere des Kopf-Seitengassacks (3) einströmt, und daß die Gasleitung (9) als langgestreckter, dem Verlauf des Dachrahmens (5) angepaßter gebogener Körper ausgebildet ist.

8. Insassen-Rückhaltesystem nach Anspruch 7, **dadurch gekennzeichnet, daß** die axialen Enden der Gasleitung im Bereich der A- oder der fahrzeugheckseitigen Säule des Fahrzeugs enden und Gasgenerator (7) oder Druckgasbehälter (13) im Bereich der A-Säule oder der fahrzeugheckseitigen Säule untergebracht sind.

## Claims

1. A device for inflating a vehicle occupant restraint system, in particular a gas bag (3), comprising
a gas generator (7) containing pyrotechnic propellant material, and
a compressed gas container (13), the gas generator (7) and the compressed gas container (13) being activated and introducing the gas thereof into the restraint system in a case of restraint,
**characterized in that**
the gas generator (7) is arranged outside of, separate from and spaced apart from the compressed gas container (13) and is in fluid communication with the compressed gas container (13) via a gas pipe (9) designed as an elongated body,
the gas generator (7) and the compressed gas container (13) being arranged at mutually opposite ends of the gas pipe (9), and gas produced on activation of the gas generator (7) flowing to the compressed gas container (13) via the gas pipe (9) to open the compressed gas container.

2. The device according to Claim 1, **characterized in that** the gas pipe (9) has outflow openings (11) via which the gas of the gas generator (7) and of the compressed gas container (13) flows into the restraint system.

3. The device according to Claim 1 or 2, **characterized in that** the restraint system comprises a gas bag (3), that the gas pipe (9) is in fluid communication with the interior of the gas bag (3), and that the gas generator (7) and the compressed gas container (13) jointly inflate the gas bag (3).

4. The device according to any of the preceding claims, **characterized in that** the gas pipe (9) is made of a flexible material.

5. The device according to any of the preceding claims, **characterized in that** the gas pipe (9) is an elongated body (9) curved in an arc shape, the course of which is adapted to the course of the roof frame of the vehicle in which it is installed.

6. An occupant restraint system for a vehicle having a roof frame (5), the restraint system comprising a head/side gas bag (3) which in a case of restraint covers at least regions of the side windows of the vehicle, and the device according to any of the preceding claims, the head/side gas bag (3), in the non-activated state, being arranged under the roof frame lining.

7. The occupant restraint system according to Claim 6, **characterized in that** the head/side gas bag (3) extends from at least laterally of the front occupant to at least laterally of the rear occupant, and that the device has a gas pipe (9) via which gas flows into the interior of the head/side gas bag (3), and that the gas pipe (9) is configured as an elongated body having a curvature adapted to the course of the roof frame (5).

8. The occupant restraint system according to Claim 7, **characterized in that** the axial ends of the gas pipe terminate in the region of the A-column or the column of the vehicle at the rear side of the vehicle, and that the gas generator (7) or the compressed gas container (13) are accommodated in the region of the A-column or the column at the rear side of the vehicle.

## Revendications

1. Dispositif de gonflage d'un système de retenue de passager de véhicule, en particulier d'un coussin à gaz, comportant
un générateur de gaz contenant un matériau propulseur pyrotechnique (7) et
un réservoir de gaz comprimé (13), le générateur de gaz (7) et le réservoir de gaz comprimé (13) étant activés en cas de retenue et introduisant leur gaz dans le système de retenue,
**caractérisé en ce que**
le générateur de gaz (7) est agencé à l'extérieur, séparément et à distance du réservoir de gaz comprimé (13) et est relié par écoulement au réservoir de gaz comprimé (13) via une conduite de gaz (9) réalisée sous forme de corps allongé,
le générateur de gaz (7) et le réservoir de gaz comprimé (13) étant agencés chacun à des extrémités opposées de la conduite de gaz (9), et le gaz produit lors de l'activation du générateur de gaz (7) s'écoulant via la conduite de gaz (9) vers le réservoir de gaz comprimé (13) et ouvrant celui-ci.

2. Dispositif selon la revendication 1, **caractérisé en ce que** la conduite de gaz (9) présente des orifices d'écoulement (11) via lesquels le gaz du générateur de gaz (7) et du réservoir de gaz comprimé (13) s'écoule dans le système de retenue.

3. Dispositif selon la revendication 1 ou 2, **caractérisé en ce que** le système de retenue présente un générateur de gaz (7) et **en ce que** la conduite de gaz (9) est en liaison d'écoulement avec l'intérieur du coussin à gaz (3), et **en ce que** le générateur de gaz (7) et le réservoir de gaz comprimé (13) gonflent en commun le coussin à gaz (3).

4. Dispositif selon l'une des revendications précédentes, **caractérisé en ce que** la conduite de gaz (9) est en matériau flexible.

5. Dispositif selon l'une des revendications précédentes, **caractérisé en ce que** la conduite de gaz (9) est un corps allongé courbé en forme d'arc dont le tracé est adapté au tracé du cadre de toit du véhicule dans lequel il est monté.

6. Système de retenue de passager pour un véhicule qui présente un cadre de toit (5), le système de retenue comprend un coussin à gaz latéral de tête (3) qui, en cas de retenue, recouvre au moins des zones des vitres latérales du véhicule, et qui comprend le dispositif selon l'une des revendications précédentes, le coussin à gaz latéral de tête (3) étant agencé, à l'état non activé, au-dessous de la garniture de cadre de toit.

7. Système de retenue de passager selon la revendication 6, **caractérisé en ce que** le coussin à gaz latéral de tête (3) s'étend depuis au moins le côté du passager avant jusqu'à au moins le côté du passager arrière, et **en ce que** le dispositif présente une conduite de gaz (9) via laquelle du gaz s'écoule dans l'intérieur du coussin à gaz latéral de tête (3), et **en ce que** la conduite de gaz est réalisée sous forme de corps allongé incurvé adapté au tracé du cadre de toit (5).

8. Système de retenue de passager selon la revendication 7, **caractérisé en ce que** les extrémités axiales de la conduite de gaz se terminent dans la zone de la colonne A ou de la colonne côté arrière du véhicule et le générateur de gaz (7) ou le réservoir de gaz comprimé (13) sont logés dans la zone de la colonne A ou de la colonne côté arrière du véhicule.
